# EUROPEAN PATENT APPLICATION

(11) **EP 2 079 011 A1**
(43) Date of publication of application: **15.07.2009**
(21) Application number: 08172844.6
(22) Date of filing: 23.12.2008
(51) Int. Cl.: G06F 3/048, H04M 1/725

(54) **Handheld electronic device and screen lock method thereof**

(30) Priority: 28.12.2007 TW 96150960
(71) Applicant: HTC Corporation, Taoyuan City Taoyuan County (TW)
(72) Inventor: Tan, Yun-Lon, Taoyuan (TW); Hou, Chun-Yao, Taoyuan (TW); Wang, Yi-Hua, Taoyuan (TW)
(74) Representative: Lang, Christian

(57) **Abstract**

A handheld electronic device and a screen lock method thereof are provided. The method includes the following steps. Firstly, a detecting module detects at least one touched area on a touch screen. Next, when the at least one touched area reaches a threshold, the processing module disables the function of the touch screen.

## Description

This application claims the benefit of Taiwan application Serial No. 96150960 filed on December 28, 2007, the subject matter of which is incorporated herein by reference.

### BACKGROUND OF THE INVENTION

### Field of the Invention

The invention relates in general to a handheld electronic device and a screen lock method thereof, and more particularly to a handheld electronic device with a touch screen and a screen lock method thereof.

### Description of the Related Art

A touch screen is a sensor screen. As the user can directly operate an electronic device by touching an icon, a button or a menu shown on the screen, the touch screen has won a great popularity due to the convenience of use. Currently, the touch screen has been widely used in many handheld electronic devices such as mobile phones.

A user may put his mobile phone with a touch screen in his pocket or hand-bag when he is moving. However, the pocket or the hand-bag may touch the touch screen and result in an unintended touch which may force the electronic device to enter a communication mode or an off mode. This is indeed a great inconvenience and a big annoyance to the user.

### SUMMARY OF THE INVENTION

The invention is directed to a handheld electronic device and a screen lock method thereof capable of automatically disabling a function of a touch screen according to the result of automatic detection so as to avoid the occurrence of unintended touch.

According to a first aspect of the present invention, a handheld electronic device including a touch screen, a detecting module and a processing module is provided. The detecting module detects the at least one touched area on a touch screen. The processing module is coupled to the touch screen and the detecting module, and when the at least one touched area reaches a threshold, the processing module disables a function of the touch screen.

According to a second aspect of the present invention, a screen lock method applicable to a handheld electronic device with touch screen. The screen lock method includes the following steps. Firstly, at least one touched area on a touch screen is detected. Next, when the at least one touched area reaches a threshold, a function of the touch screen is disabled.

The invention will become apparent from the following detailed description of the preferred but non-limiting embodiments. The following description is made with reference to the accompanying drawings.

### BRIEF DESCRIPTION OF THE DRAWINGS

FIG. 1 shows a block diagram of a handheld electronic device according to a preferred embodiment of the invention; and

FIG. 2 shows an example of the flowchart of a screen lock method according to a preferred embodiment of the invention.

### DETAILED DESCRIPTION OF THE INVENTION

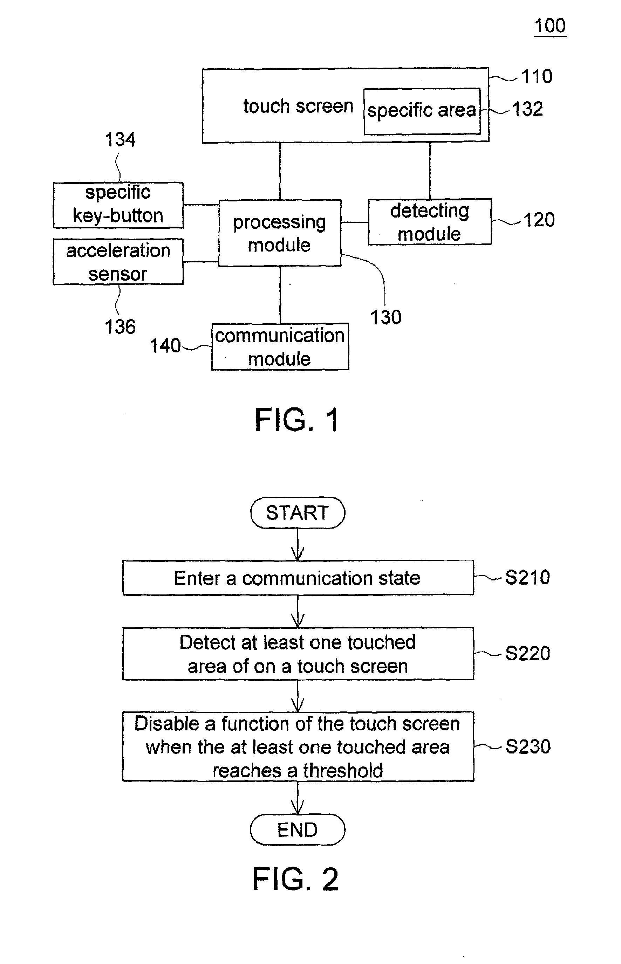

Referring to FIG. 1, a block diagram of a handheld electronic device according to a preferred embodiment of the invention is shown. The handheld electronic device 100, such as a mobile phone, includes a touch screen 110, a detecting module 120 and a processing module 130. The detecting module 120 detects at least one touched area on the touch screen 110. The processing module 130 is coupled to the touch screen 110 and the detecting module 120. When the at least one touched area reaches a threshold, the processing module 130 disables a function of the touch screen 110.

After the processing module 130 disables the function of the touch screen 110, no corresponding function is enabled when the icon, the button or the menu displayed on the touch screen 110 is touched. Thus, if the user places the handheld electronic device 100 in his hand-bag or pocket, then the processing module 130 disables the function of the touch screen 110 when the at least one touched area on the touch screen 110 touched by hand-bag or pocket touches reaches the threshold. Thus, when the hand-bag or pocket touches an icon, a button or a menu shown on the touch screen 110, the corresponding function of the icon, the button or the menu will not be enabled , hence avoiding unintended touch.

When the hand-bag or pocket touches the touch screen 110, the detecting module 120 may detect many touched areas. In the present embodiment of the invention, the processing module 130 is exemplified by disabling the function of the touch screen 110 when the at least one of the touched areas reaches a threshold. In practical application, the processing module 130 can be designed to not disable the function of the touch screen 110 until all touched areas reaches the threshold.

Take the mobile phone for example. Unintended touch may occur to the mobile phone when the mobile phone is placed in a hand-bag or a pocket or when the mobile phone is in a communication state. When the user talks via the mobile phone, his face may easily touch the icon, the button or the menu shown on the touch screen 110 and enables an undesired command. Preferably, the handheld electronic device 100 further includes a communication module 140 coupled to the processing module 130 for answering or making a call. After the communication module 140 answers or makes a call and enters a communication state, the processing module 130 compares the threshold with the at least one touched area, and further disables the function of the touch screen 110 when the at least one touched area reaches a threshold. Therefore, when the handheld electronic device 100 is in communication state, the icon, the button or the menu shown on the touch screen 110 will not enable any corresponding functions when touched by the ear or the cheek unintentionally.

Also, when the handheld electronic device 100 is in a communication state and the at least one touched area on the touch screen 110 reaches the threshold, the processing module 130 disables the function of the touch screen 110, not only avoiding the function of the touch screen 110 being enabled intentionally, but also avoiding the function of the touch screen 110 being disabled intentionally.

When the function of the touch screen 110 is disabled, the processing module 130, after receiving a unlocking signal, enables the function of the touch screen 110. The unlocking signal can be generated according to different predetermined methods.

Firstly, the unlocking signal can be generated by pressing a specific key-button. As indicated in FIG. 1, the handheld electronic device 100 further includes a specific key-button 134 that is pre-determined. The unlocking signal is generated when the specific key-button 134 is pressed. The processing module 130, after receiving the unlocking signal, enables the function of the touch screen 110.

Moreover, the unlocking signal can be generated by pressing a specific area on the touch screen 110. The touch screen 110 has a specific area 132 that is pre-determined. The unlocking signal is generated when the specific area 132 is pressed. The processing module 130, after receiving the unlocking signal, enables the function of the touch screen 110.

Furthermore, the unlocking signal can also be generated by executing a specific sliding operation. The unlocking signal is generated when the specific sliding operation that is pre-determined is executed on the touch screen 110. The processing module 130, after receiving the unlocking signal, enables the function of the touch screen 110. Examples of the specific sliding operation include drawing a symbol such as a circle or a cross.

Also, the unlocking signal can be generated by wobbling the handheld electronic device 100. As indicated in FIG. 1, the handheld electronic device 100 further includes an acceleration sensor 136. The unlocking signal is generated when the acceleration sensor 136 detects that the handheld electronic device 100 is in a wobbling state. The processing module 130, after receiving the unlocking signal, enables the function of the touch screen 110.

As disclosed above, an unlocking signal can be generated according to four methods by way of a specific key-button 134, a specific area 132, a specific sliding operation or an acceleration sensor 136, but the invention is not limited thereto. Anyone who is skilled in the technology of the invention will understand that the unlocking signal can also be generated according to other methods.

Referring to FIG. 2 whick is an example of the flowchart of a screen lock method according to a preferred embodiment of the invention is shown. The screen lock method of the present embodiment of the invention executes each step of FIG. 2 with the handheld electronic device 100 of FIG. 1 for example, but the invention is not limited thereto. Anyone who is skilled in the technology of the invention will understand that the steps and sequence of the screen lock method can be adjusted or modified to fit actual needs.

Firstly, the method begins at step S210, the handheld electronic device enters a communication state. The screen lock method of the present embodiment of the invention first of all executes step S210 to check if the at least one touched area reaches a threshold in a communication state to a command being unintentionally enabled in the communication state.
Despite the screen lock method includes step S210 in the present embodiment of the invention, step S210 does not necessarily have to be executed.

Next, the method proceeds to step S220, the detecting module 120 detects the at least one touched area on the touch screen 110. After that, the method proceeds to step S230, the processing module 130 disables a function of the touch screen 110 when the at least one touched area reaches the threshold. In the present embodiment of the invention, the screen lock method is exemplified by disabling the function of the touch screen 110 when at least one of the touched areas the processing module 130 reaches the threshold. However, in practical application, the processing module 130 may be designed to not disable the function of the touch screen 110 until the the all touched areas reaches a threshold.

After disabling the function of the touch screen 110, the processing module 130 enables the function of the touch screen 110 according to the unlocking signal. The unlocking signal enables the function of the touch screen 110 by way of pressing a specific key-button 134 or a specific area 132, executing a specific sliding operation or wobbling the handheld electronic device 100.

According to the handheld electronic device and the screen lock method disclosed in the above embodiment of the invention, the at least one touched area on a touch screen is detected to determine whether to disable a function of the touch screen to avoid the handheld electronic device being unintentionally enabled. Thus, when the handheld electronic device is placed in a hand-bag or a pocket or when the user presses the receiver of the handheld electronic device against his ear, the hand-bag, the handheld electronic device will not be enabled unintentionally when the touch screen is touched by the pocket, the ear or the cheek. Furthermore, whether the at least one touched area on a touch screen reaches a threshold is detected in a communication state to avoid the function being erroneously disabled when the touch screen is touched unintentionally. Also, after the function is disabled, the function still can be enabled by many different ways. For example, an unlocking signal can be generated by way of pressing a specific key-button, pressing a specific area of the touch screen, executing a specific sliding operation or wobbling the handheld electronic device, so as to enable the function of the touch screen.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A handheld electronic device, comprising:
a touch screen;
a detecting module used for detecting at least one touched area on the touch screen; and
a processing module coupled to the touch screen and the detecting module for disabling a function of the touch screen when the at least one touched area reaches a threshold.

2. The handheld electronic device according to claim 1, further comprising a communication module coupled to the processing module for answering or making a call, and when the communication module answers or makes the call to enter a communication state, the processing module compares the threshold with the at least one touched area, and disables the function of the touch screen when the at least one the touched area reaches the threshold.

3. The handheld electronic device according to claim 1, wherein the processing module, after receiving an unlocking signal, enables the function of the touch screen.

4. The handheld electronic device according to claim 3, wherein the unlocking signal comprises the signal generated by pressing a specific area on the touch screen.

5. The handheld electronic device according to claim 3, wherein the unlocking signal comprises the signal generated by pressing a specific key-button of the handheld electronic device.

6. The handheld electronic device according to claim 3, wherein the unlocking signal comprises the signal generated by executing a specific sliding operation on the touch screen.

7. The handheld electronic device according to claim 6, wherein the specific sliding operation is drawing a symbol.

8. A screen lock method applicable to a handheld electronic device with a touch screen, wherein the screen lock method comprises:
(a) detecting at least one touched area on a touch screen; and
(b) disabling a function of the touch screen when the at least one touched area reaches a threshold.

9. The screen lock method according to claim 8, wherein before the step (a), the method further comprises:
(c) entering a communication state.

10. The screen lock method according to claim 8, wherein after the step (b), the method further comprises:
(d) enabling the function of the touch screen according to a unlocking signal.

11. The screen lock method according to claim 10, wherein the unlocking signal is generated by pressing a specific area on the touch screen.

12. The screen lock method according to claim 10, wherein the unlocking signal is generated by pressing a specific key-button of the handheld electronic device.

13. The screen lock method according to claim 10, wherein the unlocking signal is generated by executing a specific sliding operation on the touch screen.

14. The screen lock method according to claim 13, wherein the specific sliding operation is drawing a symbol.
